# EUROPEAN PATENT APPLICATION

(11) **EP 4 442 347 A1**
(43) Date of publication of application: **09.10.2024**
(21) Application number: 22920787.3
(22) Date of filing: 24.11.2022
(51) Int. Cl.: B01D 39/10, C09D 7/61, C09D 7/65, C09D 5/16, C09D 5/18, F24F 7/06

(54) **COATING FILTER AND HOOD TO WHICH SAME IS APPLIED**

(30) Priority: 14.01.2022 KR 20220006156; 27.01.2022 KR 20220012691
(71) Applicant: Samsung Electronics Co., Ltd., Suwon-si, Gyeonggi-do 16677 (KR)
(72) Inventor: HAN, Suhyeon, Suwon-si Gyeonggi-do 16677 (KR); IM, Myunghyuk, Suwon-si Gyeonggi-do 16677 (KR); KOH, Youngdeog, Suwon-si Gyeonggi-do 16677 (KR); SUNG, Duckjin, Suwon-si Gyeonggi-do 16677 (KR); HA, Yujeub, Suwon-si Gyeonggi-do 16677 (KR)
(74) Representative: Gulde & Partner
(86) International application number: PCT/KR2022/018675
(87) International publication number: WO 2023/136458

(57) **Abstract**

Disclosed in the present specification are a coating filter having a coating layer formed on a filter surface to improve cleanability and a hood using the same. A coating filter according to one embodiment of the present disclosure includes: a stainless steel or aluminum material; and a coating layer formed on the material, wherein the coating layer may include silicone and methyl methacrylate (MMA) resin.

## Description

### [Technical Field]

The present disclosure relates to a coating filter and a hood using the same, and more particularly, to a coating filter having a coating layer formed on a filter surface to improve cleanability and a hood using the same.

### [Background Art]

Filters for filtering fumes sucked from cooking appliances are provided in hoods that handle ventilation in kitchens.

During the operation of hoods, filters inside the hoods are stained with grease marks due to oil vapor contained in fumes. Such grease marks widely spread over typical filter materials and are solidified and not easily removed. Also, filter performance may be degraded due to the grease marks blocking filter holes.

Even when attempting to clean the filters, since typical filters have low chemical resistance, washing the filters with a strong alkaline detergent may cause failure of the filters.

Meanwhile, research projects that aim to improve performance of filters have been actively carried out, but there is almost no research that aims at improving cleanability of hood filters.

### [Disclosure]

### [Technical Problem]

The present disclosure for addressing the above problems is directed to providing a coating filter having a hybrid coating layer, in which an inorganic component and an organic component are mixed, formed thereon to improve cleanability and a hood using the same.

### [Technical Solution]

A coating filter according to one embodiment of the present disclosure includes: a stainless steel or aluminum material; and a coating layer formed on the material, wherein the coating layer may include silicone and methyl methacrylate (MMA) resin.

Also, in the coating filter according to one embodiment of the present disclosure, a paint forming the coating layer may include, in weight percent, 5 to 7% silicone, 3 to 4.5% MMA resin, and the balance being a diluent and unavoidable impurities.

Also, in the coating filter according to one embodiment of the present disclosure, the paint forming the coating layer may further include, in weight percent, 3 to 5% fluorine-containing silicone oil.

Also, in the coating filter according to one embodiment of the present disclosure, the diluent may include ethyl acetate.

Also, in the coating filter according to one embodiment of the present disclosure, the coating layer may have a thickness ranging from 1 to 5 µm.

Also, in the coating filter according to one embodiment of the present disclosure, the filter may be at least one of a mesh filter, a baffle filter, and a perforated filter.

Also, in the coating filter according to one embodiment of the present disclosure, the perforated filter may have an opening ratio ranging from 28 to 32%.

Also, in the coating filter according to one embodiment of the present disclosure, the perforated filter may have a hole diameter of 1 mm or larger.

Also, the coating filter according to one embodiment of the present disclosure may have a water contact angle at 100° or larger.

Also, the coating filter according to one embodiment of the present disclosure may have a pencil hardness of 3H or higher and 5H or lower.

Also, a method of manufacturing a coating filter according to one embodiment of the present disclosure may include: preparing a filter made of a stainless steel or aluminum material; forming a coating layer on a surface of the filter; and drying the filter on which the coating layer is formed.

Also, in the method of manufacturing a coating filter according to one embodiment of the present disclosure, a paint forming the coating layer may include, in weight percent, 5 to 7% silicone, 3 to 4.5% MMA resin, and the balance being a diluent and unavoidable impurities.

Also, in the method of manufacturing a coating filter according to one embodiment of the present disclosure, the paint forming the coating layer may further include, in weight percent, 3 to 5% fluorine-containing silicone oil.

Also, in the method of manufacturing a coating filter according to one embodiment of the present disclosure, the filter may be at least one of a mesh filter, a baffle filter, and a perforated filter.

Also, in the method of manufacturing a coating filter according to one embodiment of the present disclosure, the forming of the coating layer may be performed using a spray gun.

Also, in the method of manufacturing a coating filter according to one embodiment of the present disclosure, the drying may be performed for 20 to 40 minutes at 50 to 180 °C.

Also, a hood according to one embodiment of the present disclosure includes: a hood main body; and a coating filter along a flow path of the hood main body, wherein the coating filter may include a stainless steel or aluminum material and a coating layer formed on the material, and the coating layer may include silicone and MMA resin.

Also, in the hood according to one embodiment of the present disclosure, a paint forming the coating layer may include, in weight percent, 5 to 7% silicone, 3 to 4.5% MMA resin, and the balance being a diluent and unavoidable impurities.

Also, in the hood according to one embodiment of the present disclosure, the paint forming the coating layer may further include, in weight percent, 3 to 5% fluorine-containing silicone oil.

In addition, in the hood according to one embodiment of the present disclosure, the coating filter may have a water contact angle at 100° or larger.

### [Advantageous Effects]

According to one example of the present disclosure, it is possible to provide a coating filter having a hybrid coating layer, in which organic and inorganic components are mixed, formed on a surface thereof to improve cleanability and a hood using the same.

However, advantageous effects that can be achieved by a coating filter and a hood using the same according to embodiments of the present disclosure are not limited to those mentioned above, and other unmentioned advantageous effects should be clearly understood by those of ordinary skill in the art to which the present disclosure pertains from the description below.

### [Description of Drawings]

FIG. 1 is a schematic diagram of a coating filter according to one example of the present disclosure.
FIG. 2 is a schematic diagram of a mesh filter.
FIG. 3 is a schematic diagram of a baffle filter.
FIG. 4 is a schematic diagram of a perforated filter.
FIG. 5 is a flowchart of a method of manufacturing a coating filter according to one example of the present disclosure.
FIG. 6 is a schematic diagram of a hood according to one example of the present disclosure.
FIG. 7 is a picture of a result of a contact angle measurement test of a surface of a noncoated stainless steel material.
FIG. 8 is a picture of a result of a contact angle measurement test of a surface of a coated material according to one example of the present disclosure.
FIG. 9 is a picture of a result of a soybean oil heating test for a noncoated stainless steel material.
FIG. 10 is a picture of a result of a soybean oil heating test for a coated material according to one example of the present disclosure.
FIG. 11 is a picture of a contamination level of the coating filter according to one example of the present disclosure before washing.
FIG. 12 is a picture of a contamination level of the coating filter according to one example of the present disclosure after washing.

### [Best Mode of the Invention]

A coating filter according to one embodiment of the present disclosure may include: a stainless steel or aluminum material; and a coating layer formed on the material, wherein the coating layer may include silicone and methyl methacrylate (MMA) resin.

### [Modes of the Invention]

Hereinafter, embodiments of the present disclosure will be described in detail with reference to the accompanying drawings. The following embodiments are presented to sufficiently convey the spirit of the present disclosure to those of ordinary skill in the art to which the present disclosure pertains. The present disclosure is not limited to the embodiments presented herein and may also be embodied in different forms. In the drawings, illustration of parts irrelevant to the description may be omitted to clarify the present disclosure, and sizes of components may be somewhat exaggerated to help understanding.

Throughout the specification, when a certain part is described as "including" a certain component, unless particularly described otherwise, this means that the part may further include other components instead of excluding other components.

A singular expression includes a plural expression unless the context clearly indicates otherwise.

A coating filter according to one embodiment of the present disclosure may include: a stainless steel or aluminum material; and a coating layer formed on the material, wherein the coating layer may include silicone and methyl methacrylate (MMA) resin.

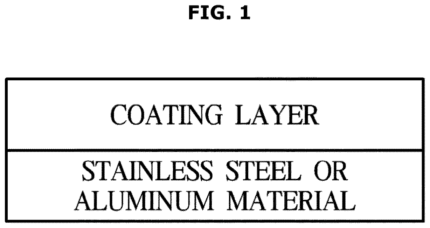

FIG. 1 is a schematic diagram of a coating filter according to one example of the present disclosure.

Referring to FIG. 1, a coating filter according to one example of the present disclosure may include a stainless steel or aluminum material and a coating layer formed thereon.

The coating layer may be formed as an inorganic/organic hybrid coating layer by mixing a ceramic, which includes silicone, as an inorganic component and MMA resin as an organic component.

In the case of a filter on which a coating layer is not formed, contaminants easily adhere to a filter surface and are not easily removed. However, when a coating layer is formed on a filter surface, a contact angle is increased such that contaminants do not adhere easily, and even when contaminants adhere, the contaminants gather in circular shapes and do not solidify, which makes it easy to remove the contaminants.

Meanwhile, hood filters are usually located at an upper portion of a range, which is a heating appliance, and cleaned with a detergent after cooking, and thus require excellent heat resistance, hardness, and chemical resistance.

However, in the case of a coating formed only of an inorganic ceramic, chemical resistance and boiling water resistance are low. Generally, an inorganic coating paint is produced using a solgel method, and silane is used as a crosslinking agent. Since silane may cause hydrolysis when in contact with water, the chemical resistance and boiling water resistance of the coating formed only of an inorganic ceramic may decrease. Accordingly, there is a difficulty in applying the coating formed only of an inorganic ceramic to a hood filter.

Therefore, in the present disclosure, an inorganic/organic hybrid coating layer is applied to improve cleanability and supplement chemical resistance and boiling water resistance of an inorganic ceramic coating paint. In an inorganic/organic hybrid coating paint, since insufficient chemical resistance and boiling water resistance of an inorganic ceramic and insufficient hardness of an organic polymer are each supplemented by the other due to a condensation process by heating and crosslinking of the organic polymer, excellent physical properties can be secured.

Meanwhile, by implementing various colors by adding a small amount of pigment, an aesthetically pleasing gloss and a luxurious exterior may be implemented.

Hereinafter, reasons for limiting numerical values of ranges of components of a paint that forms a coating layer in one example of the present disclosure will be described. Hereinafter, the unit "%" is weight percent unless particularly mentioned otherwise.

In the coating filter according to one embodiment of the present disclosure, a paint forming the coating layer may include, in weight percent, 5 to 7% silicone, 3 to 4.5% MMA resin, and the balance being a diluent and unavoidable impurities.

When the content of silicone is low, properties of an inorganic ceramic coating paint may weaken, and a hardness may decrease. However, when the content of silicone is too high, chemical resistance and boiling water resistance may decrease. Therefore, preferably, the content of silicone may be controlled to be 5 to 7%. More preferably, the content of silicone may be controlled to be 5.5 to 6.5%.

Conversely, when the content of MMA resin is low, properties of an inorganic ceramic coating paint may strengthen, and chemical resistance and boiling water resistance may decrease. However, when the content of MMA resin is too high, a hardness may decrease. Therefore, preferably, the content of MMA resin is controlled to be 3 to 4.5%. More preferably, the content of MMA resin may be controlled to be 3.5 to 4%.

Also, since unintended impurities from raw materials or the surrounding environment may be unavoidably mixed in typical manufacturing processes, such impurities are non-excludable. These impurities should be familiar to anyone of ordinary skill in the art of typical manufacturing processes, and thus the entire content thereof is not separately mentioned herein.

Also, in the coating filter according to one embodiment of the present disclosure, the paint forming the coating layer may further include, in weight percent, 3 to 5% fluorine-containing silicone oil.

The fluorine-containing silicone oil may be shown as Chemical Formula 1 below.

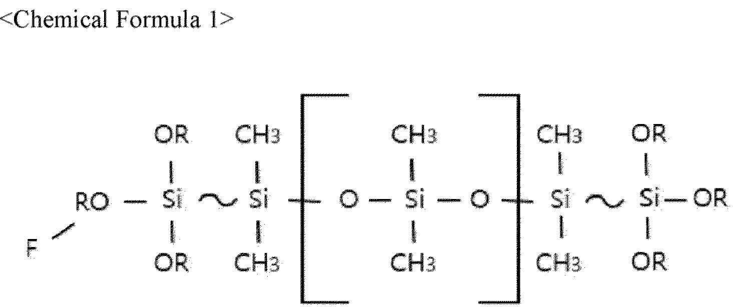

The fluorine-containing silicone oil imparts a function of reducing an adhesion area by further increasing the contact angle when an oil component in a contaminant comes in contact with a filter surface.

When the content of the fluorine-containing silicone oil is low, it is difficult to further increase the contact angle. However, when the content of the fluorine-containing silicone oil is too high, transparency of the coating layer may decrease, the exterior may become foggy, and the filter may seem unsanitary. Therefore, preferably, the content of the fluorine-containing silicone oil may be controlled to be 3 to 5%. More preferably, the content of the fluorine-containing silicone oil may be controlled to be 3.5 to 4.5%.

Also, in the coating filter according to one embodiment of the present disclosure, the diluent may include ethyl acetate. However, the majority of the diluent may evaporate in a drying process.

The coating layer may have a thickness ranging from 1 to 5 µm.

When the thickness of the coating layer is thin, the durability of the coating layer may decrease, or it may be difficult to secure sufficient cleanability. However, when the thickness of the coating layer is too thick, the manufacturing time may increase, and productivity may decrease.

Also, the filter may be at least one of a mesh filter, a baffle filter, and a perforated filter.

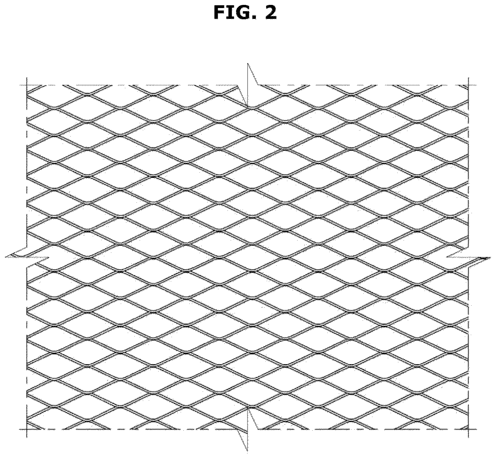

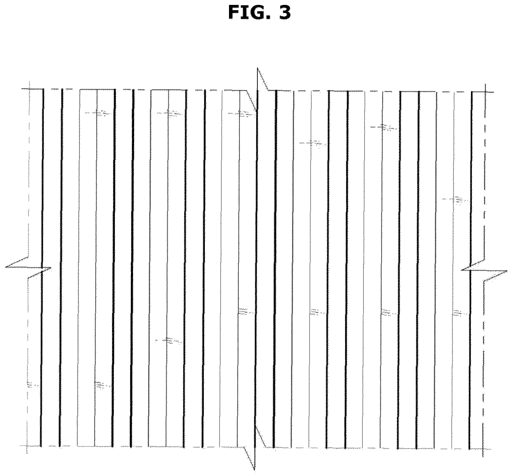

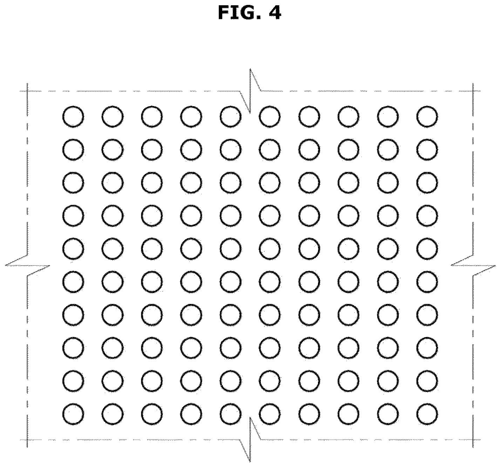

FIG. 2 is a schematic diagram of a mesh filter, FIG. 3 is a schematic diagram of a baffle filter, and FIG. 4 is a schematic diagram of a perforated filter.

Referring to FIGS. 2, 3, and 4, a mesh filter is a filter using a mesh structure, a baffle filter is a filter having a shape in which a plurality of linear baffles are connected, and a perforated filter is a filter having a shape in which a plurality of holes are provided.

The perforated filter may have an opening ratio ranging from 28 to 32%.

The opening ratio is a ratio of areas of holes relative to the entire area of the filter. When the opening ratio is too low, a fluid flow may be excessively interfered with, causing the sucking performance to decrease, and when the opening ratio is too high, the filter performance may decrease. Therefore, the opening ratio of the perforated filter may be controlled to be 28% to 32%. Preferably, the opening ratio of the perforated filter may be controlled to be 29% to 31%.

Also, the perforated filter may have a hole diameter of 1 mm or larger. When the hole diameter is less than 1 mm, the coating layer may block the holes, causing the sucking performance to decrease.

Meanwhile, since the opening ratio increases as the hole diameter increases, the hole diameter may be controlled within the range of the opening ratio, and preferably, may be provided to be 1 mm or larger.

Also, the coating filter according to one embodiment of the present disclosure may have a water contact angle of 100° or larger and a pencil hardness that is 3H or higher and 5H or lower.

Next, a method of manufacturing a coating filter according to another aspect of the present disclosure will be described.

A method of manufacturing a coating filter according to one embodiment of the present disclosure may include: preparing a filter made of a stainless steel or aluminum material; forming a coating layer on a surface of the filter; and drying the filter on which the coating layer is formed.

A paint forming the coating layer may include, in weight percent, 5 to 7% silicone, 3 to 4.5% MMA resin, and the balance being a diluent and unavoidable impurities.

Also, in the method of manufacturing a coating filter according to one embodiment of the present disclosure, the paint forming the coating layer may further include, in weight percent, 3 to 5% fluorine-containing silicone oil.

The reasons for limiting the numerical values of the ranges of the components of the paint forming the coating layer are as described above. Hereinafter, the manufacturing method will be described in more detail.

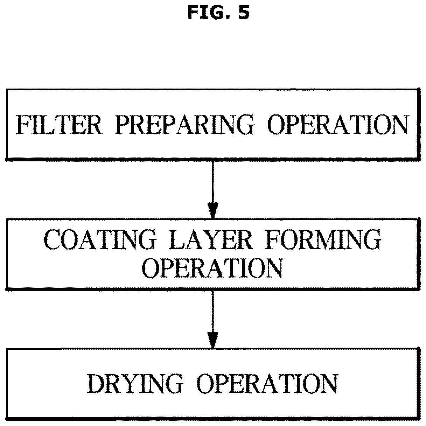

FIG. 5 a flowchart of a method of manufacturing a coating filter according to one example of the present disclosure.

Referring to FIG. 5, the method of manufacturing a coating filter according to one example of the present disclosure may include a series of a filter preparing operation, a coating layer forming operation, and a drying operation.

In the filter preparing operation, a stainless steel or aluminum material may be formed into a mesh filter, a baffle filter, or a perforated filter to prepare a filter. However, the present disclosure is not limited thereto, and the material or the type of filter may vary depending on the usage environment and the purpose of use.

Next, the coating layer forming operation may be performed using a spray gun.

When a coating paint is painted by dipping, as the coating paint flows downward, the paint may gather on a hole at a lower end of a perforated filter, and a hole blockage problem may occur. Therefore, in the present disclosure, instead of dipping, a spray gun may be used to evenly spray the coating paint and form the coating layer.

Also, the drying operation may be performed for 20 to 40 minutes at 50 to 180 °C.

When the drying temperature is low or the drying time is short, it may be difficult to evenly form the coating layer, or the durability of the coating layer may decrease. However, when the drying temperature is too high or the drying time is too long, cracks may be formed in the coating layer.

Next, a hood according to another aspect of the present disclosure will be described.

A hood according to one embodiment of the present disclosure includes: a hood main body; and a coating filter provided in a flow path of the hood main body, wherein the coating filter may include a stainless steel or aluminum material and a coating layer formed on the material, and the coating layer may include silicone and MMA resin.

A paint forming the coating layer may include, in weight percent, 5 to 7% silicone, 3 to 4.5% MMA resin, and the balance being a diluent and unavoidable impurities and may further include, in weight percent, 3 to 5% fluorine-containing silicone oil.

Also, the coating filter may have a water contact angle of 100° or larger.

The reasons for limiting the numerical values of the ranges of the components of the paint forming the coating layer are as described above. Hereinafter, the hood will be described in more detail.

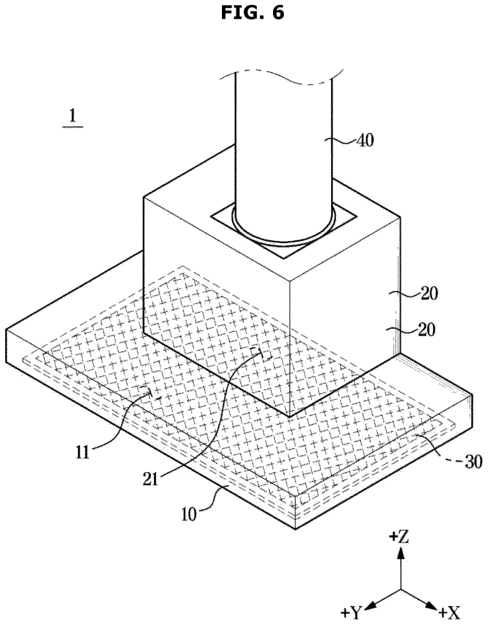

FIG. 6 is a schematic diagram of a hood according to one embodiment of the present disclosure.

Referring to FIG. 6, a hood 1 according to one embodiment of the present disclosure may include a hood main body including a first case 10 and a second case 20, a coating filter 30, and a fan module (not illustrated).

The first case 10 may include an inlet through which smoke or the like generated from a heating device is introduced. The inlet may be provided in a lower surface of the first case 10. The coating filter 30 that corresponds to the inlet may be mounted on the inlet. The coating filter 30 may be mounted on the first case 10 to cover the inlet. However, the mounting position of the coating filter 30 is not limited thereto. The coating filter 30 may be provided to filter foreign matter included in the smoke or the like introduced through the inlet.

The first case 10 may be provided in a substantially rectangular parallelepiped shape. A flow path 11 may be formed in the first case 10. The flow path 11 may be provided to guide air passing through the coating filter 30 and the inlet toward the second case 20. The flow path 11 may be the space inside the first case 10, or in other cases, a space separately partitioned in the first case 10 or a duct installed in the first case 10.

The second case 20 may be disposed on the first case 10. The fan module may be disposed in the second case 20. Like the first case 10, the second case 20 may be provided in a substantially rectangular parallelepiped shape. The second case 20 may be provided so that areas of a lower surface and an upper surface are smaller and a height is larger, compared to the first case 10. The second case 20 may be provided separately from the first case 10 and coupled thereto, or in other cases, the second case 20 and the first case 10 may be provided integrally. Also, the second case 20 may be integrally formed with the first case 10 by an upper surface of the first case 10 extending upward obliquely relative to a first direction Z. However, the shape of the second case 20 is not limited thereto.

A flow path 21 may be formed in the second case 20. The flow path 21 may be connected to the flow path 11 of the first case 10. Air introduced through the inlet may be discharged to the outside through a vent pipe 40 after passing through the flow path 11 of the first case 10 and the flow path 21 of the second case 20. The fan module may be provided in the flow path 21. The flow path 21 may be the space inside the second case 20, or in other cases, a space separately partitioned in the second case 20 or a duct installed in the second case 20.

Hereinafter, examples and comparative examples will be described to help understanding of the present disclosure. However, the following description only corresponds to one example relating to the content and advantageous effects of the present disclosure, and the scope of rights and the advantageous effects of the present disclosure are not necessarily limited thereto.

### {Examples}

### <Contact angle measurement test>

A contact angle measurement test was performed by dropping 1.0 µl of water onto samples and measuring a contact angle using contact angle measurement equipment from Krüss at room temperature (25 °C).

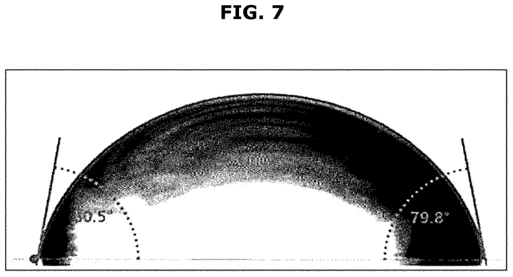

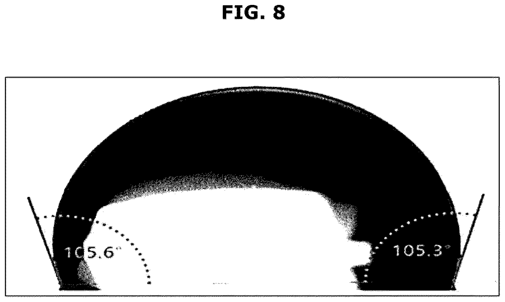

FIG. 7 is a picture of a result of a contact angle measurement test of a surface of a noncoated stainless steel material, and FIG. 8 is a picture of a result of a contact angle measurement test of a surface of a coated material according to one example of the present disclosure.

Referring to FIGS. 7 and 8, a contact angle was measured to be 79.8 to 80.5° in the case of the noncoated material, and a contact angle was measured to be 105.3 to 105.6° in the case of the coated material. That is, the contact angle of the coated material was larger, and thus it was determined that cleanability of the coated material is better due to a smaller area coming in contact with contaminants.

### <Soybean oil heating test>

A soybean oil heating test was performed by adding 1 l of soybean oil to a pot, placing samples 20 cm above the pot, performing 5 cycles with heating for 10 minutes at 150 °C and resting for 30 minutes as 1 cycle, and then observing contamination of surfaces of the samples.

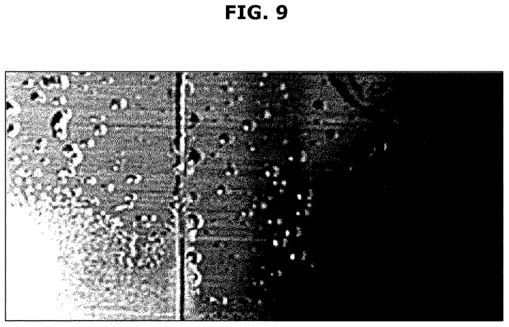

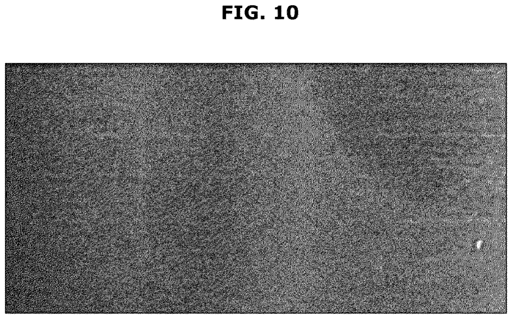

FIG. 9 is a picture of a result of a soybean oil heating test for a noncoated stainless steel material, and FIG. 10 is a picture of a result of a soybean oil heating test for a coated material according to one example of the present disclosure.

Referring to FIGS. 9 and 10, it was confirmed that the noncoated material was stained with a large amount of contaminants, but the coated material was hardly stained with contaminants.

### <Alkali resistance discoloration test>

An alkali resistance discoloration test was performed by depositing half of each sample in a 5% NaOH solution at 25 °C for 48 hours and then comparing color differences between deposited portions and non-deposited portions.

Table 1 below shows results of the alkali resistance discoloration test according to the content of MMA resin.

Here, it was marked as "Pass" when a color difference (ΔE) value between a deposited portion and a non-deposited portion was 1.0 or less, and it was marked as "Fail" when a color difference (ΔE) value between a deposited portion and a non-deposited portion exceeded 1.0.

Meanwhile, since a smaller color difference (ΔE) value indicates less discoloration, it may be determined that alkali resistance is higher as the color difference (ΔE) value is smaller.

**Table 1**

| Classification | Content of MMA resin (%) | Result of discoloration test |
|---|---|---|
| Comparative Example 1 | 0 | Fail |
| Comparative Example 2 | 1.5 | Fail |
| Comparative Example 3 | 6.0 | Pass |
| Example 1 | 3.5 | Pass |

Referring to Table 1, it was found that, as the content of MMA resin was higher, discoloration relating to an alkali-resistant liquid was less. Therefore, it was determined that a filter using an organic/inorganic hybrid coating has excellent alkali resistance.

### <Pencil hardness test>

A pencil hardness test was performed by drawing five lines while applying a load of 1,000 g with pencils of different hardnesses using pencil hardness tester equipment.

Here, hardnesses were measured according to whether three or more of the five lines had flaws such as an indent.

When the content of MMA resin was 6.0%, three or more lines had flaws when a 3H pencil was used. However, when the content of MMA resin was 3.5%, three or more lines did not have flaws even when a 4H pencil was used.

That is, it was confirmed that a hardness may decrease when the content of MMA resin is too high.

### <Washing test>

A washing test was performed by washing samples contaminated due to the soybean oil heating test using 15.17 g of Cascade Platinum detergent in Samsung's DW60A8375LBU dishwasher for 55 minutes and then measuring an area fraction of contaminants.

Table 2 below shows contaminated areas of a noncoated filter and a coated filter according to one example of the present disclosure before and after washing, in cases with different sizes of contaminated areas before washing.

**[Table 2]**

| Comparative Example | | Example | |
|---|---|---|---|
| Contaminated area of noncoated filter (%) | | Contaminated area of coated filter (%) | |
| Before washing | After washing | Before washing | After washing |
| 26.87 | 43.54 | 20.83 | 0.19 |
| 15.17 | 41.53 | 18.36 | 0.1 |
| 21.22 | 38.21 | 19.22 | 0.24 |
| 30.12 | 36.87 | 11.76 | 0.22 |
| 12.2 | 13.5 | 3.1 | 0.28 |

Referring to Table 2, in the case of the comparative example, since the spreadability of contaminants increased due to a small contact angle, it was confirmed that the size of the contaminated area actually increased after washing compared to before washing.

However, in the case of the example, since a contact angle was large and thus a contact area of contaminants was small, it was confirmed that the size of the contaminated area significantly decreased after washing compared to before washing.

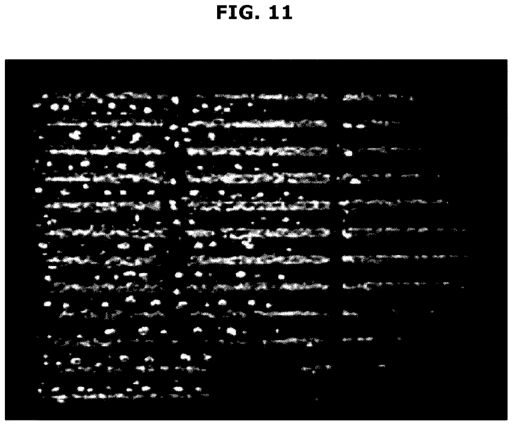

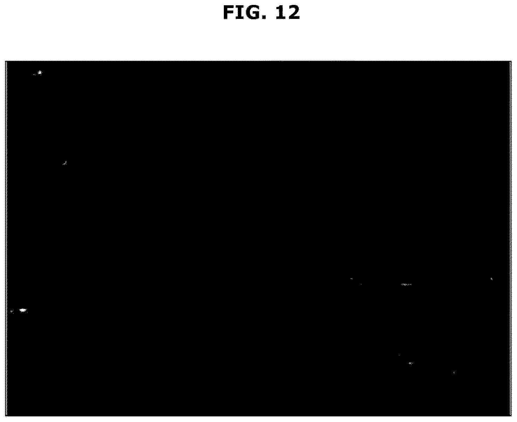

FIG. 11 is a picture of a contamination level of the coating filter according to one example of the present disclosure before washing, and FIG. 12 is a picture of a contamination level of the coating filter according to one example of the present disclosure after washing. Here, bright portions are contaminated portions, and dark portions are uncontaminated portions.

Referring to FIGS. 11 and 12, it can be confirmed that the coating filter according to one example of the present disclosure has excellent cleanability.

### [Industrial Applicability]

According to one example of the present disclosure, it is possible to provide a coating filter having a hybrid coating layer, in which organic and inorganic components are mixed, formed on a surface thereof to improve cleanability and a hood using the same.

## Claims

1. A coating filter comprising:
a stainless steel or aluminum material; and
a coating layer formed on the material,
wherein the coating layer includes silicone and methyl methacrylate (MMA) resin.

2. The coating filter of claim 1, wherein a paint forming the coating layer includes, in weight percent, 5 to 7% silicone, 3 to 4.5% MMA resin, with a balance being a diluent and unavoidable impurities.

3. The coating filter of claim 2, wherein the paint forming the coating layer further includes, in weight percent, 3 to 5% fluorine-containing silicone oil.

4. The coating filter of claim 2, wherein the diluent includes ethyl acetate.

5. The coating filter of claim 1, wherein the coating layer has a thickness ranging from 1 to 5 µm.

6. The coating filter of claim 1, wherein the filter is at least one of a mesh filter, a baffle filter, and a perforated filter.

7. The coating filter of claim 6, wherein the perforated filter has an opening ratio ranging from 28 to 32%.

8. The coating filter of claim 7, wherein the perforated filter has a hole diameter of 1 mm or larger.

9. The coating filter of claim 1, wherein a water contact angle is at 100° or larger.

10. The coating filter of claim 1, wherein a pencil hardness is 3H or higher and 5H or lower.

11. A method of manufacturing a coating filter, the method comprising:
preparing a filter made of a stainless steel or aluminum material;
forming a coating layer on a surface of the filter; and
drying the filter on which the coating layer is formed.

12. A hood comprising:
a hood main body; and
a coating filter arrangeable in a flow path of the hood main body,
wherein the coating filter includes a stainless steel or aluminum material and a coating layer formed on the material, and
the coating layer includes silicone and methyl methacrylate (MMA) resin.

13. The hood of claim 12, wherein a paint forming the coating layer includes, in weight percent, 5 to 7% silicone, 3 to 4.5% MMA resin, with a balance being a diluent and unavoidable impurities.

14. The hood of claim 13, wherein the paint forming the coating layer further includes, in weight percent, 3 to 5% fluorine-containing silicone oil.

15. The hood of claim 12, wherein the coating filter has a water contact angle at 100° or larger.
